# FASCICULE DE BREVET EUROPEEN

(11) **EP 0 863 793 B1**
(45) Date de publication et mention de la délivrance du brevet: **20.10.1999**
(21) Numéro de dépôt: 96939147.3
(22) Date de dépôt: 19.11.1996
(51) Int. Cl.: B01D 65/02, B01D 65/06, C02F 1/44

(54) **PROCEDE DE NETTOYAGE D'UNE INSTALLATION DE FILTRATION DU TYPE A MEMBRANES IMMERGEES**
REINIGUNGSVERFAHREN FÜR EINE UNTERWASSERMEMBRANFITTERANLAGE
METHOD FOR CLEANING AN IMMERSED-MEMBRANE FILTRATION APPARATUS

(30) Priorité: 22.11.1995 FR 9514188
(43) Date de publication de la demande: 16.09.1998
(73) Titulaire: OTV Omnium de Traitements et de Valorisation, 94417 St Maurice Cédex (FR); ZENON ENVIRONMENTAL INC., Burlington, Ontario L7N 3P3 (CA)
(72) Inventeur: COTE, Pierre, F-78570 Andrésy (FR); TAZI-PAIN, Annie, F-92600 Asnières-sur-Seine (FR); GRELIER, Patricia, F-78500 Sartrouville (FR)
(74) Mandataire: Vidon, Patrice
(86) Numéro de dépôt international: FR9601827
(87) Numéro de publication internationale: WO9718887

(56) Documents cités:
- EP-A- 0 510 328
- EP-A- 0 655 418
- WO-A-94/11094
- GB-A- 2 248 559
- US-A- 5 403 479
- PATENT ABSTRACTS OF JAPAN vol. 16, no. 400 (C-0977), 25 Août 1992 & JP 04 131182 A (EBARA INFILCO CO LTD), 1 Mai 1992,
- PATENT ABSTRACTS OF JAPAN vol. 12, no. 333 (C-526), 8 Septembre 1988 & JP 63 093310 A (NIPPON ATOM IND GROUP CO LTD), 23 Avril 1988,
- DATABASE WPI Week 9527 Derwent Publications Ltd., London, GB; AN 95-203022 XP002011529 & JP 07 116 482 A (KURITA WATER IND LTD) , 9 Mai 1995
- DATABASE WPI Week 9333 Derwent Publications Ltd., London, GB; AN 93-260992 XP002011530 & JP 05 177 185 A (AYA H , MITSUI CONTR CO LTD) , 20 Juillet 1993
- DATABASE WPI Week 9314 Derwent Publications Ltd., London, GB; AN 93-112165 XP002011531 & JP 05 050 082 A (KUBOTA CORP) , 2 Mars 1993

## Description

L'invention concerne le domaine des installations de filtration des effluents, et notamment des eaux, en vue de leur épuration ou de leur potabilisation. Plus précisément, l'invention concerne le domaine de telles installations incluant des membranes de filtration directement immergées dans l'effluent à traiter. Encore plus précisément, l'invention se rapporte à un procédé pour le nettoyage des membranes de telles installations.

Les installations à membranes immergées se caractérisent par l'utilisation de membranes de microfiltration ou d'ultrafiltration, planes, tubulaires ou à fibres creuses, regroupées généralement par modules n'intégrant pas de carter. Ces modules sont plongés directement dans une cuve de traitement contenant l'effluent à filtrer, et le perméat est extrait par aspiration. De telles installation de filtration sont notamment décrites dans le brevet US-A-5248424 aux noms de Côté et al., dans la demande de brevet européen EP-A-510328 et dans l'article intitulé "Direct solid-liquid separation using hollow-fiber membrane in an activated sludge aeration tank", aux noms de Yamamoto et al, paru en 1989 dans la revue Water Science Technology, vol.21, pp. 43-54.

Les membranes immergées mises en oeuvre dans de telles installations sont habituellement utilisées dans des conditions peu colmatantes à une pression transmembranaire faible n'excédant généralement pas 0,5 bar, ceci afin d'espacer autant que possible les opérations de nettoyage de ces membranes. Toutefois, les opérations de nettoyage restent nécessaires et sont classiquement effectuées à l'aide de solutions chimiques généralement chaudes.

Dans les installations à membranes classique, dans lesquelles les modules de filtration ne sont pas directement immergées dans l'effluent à filtrer mais pourvus d'un carter, et dans lesquelles une bouche de filtration est prévue, le nettoyage des membranes peut être effectué facilement sans extraire les membranes de l'installation. Ce type de nettoyage, appelé *nettoyage-en-place* consiste simplement à faire circuler une solution de nettoyage dans la boucle de recyclage. Une telle méthode est efficace puisqu'elle permet un bon contrôle de la concentration en produit chimique de la solution de nettoyage, de la température de cette solution et du temps de contact de celle-ci avec les membranes. De plus, une telle procédure de nettoyage est complètement automatisable. Enfin, le volume de rejet est faible et correspond au volume mort de la boucle de recyclage.

Toutefois, les installations de filtration du type à membranes immergées n'intègrent ni carter ni boucle de recyclage. Un des inconvénients liés à l'utilisation de telles installations réside donc dans le fait que les opérations de nettoyage sont rendues beaucoup plus difficiles par l'absence d'un tel carter entourant les modules de filtration et également par l'absence d'une telle boucle de recirculation.

Il a été proposé dans l'état de la technique plusieurs procédés de nettoyage de telles installations de filtration à membranes immergées.

L'une des ces méthodes, dite de *nettoyage-ex-situ,* consiste simplement à sortir un-à-un les modules de filtration de la cuve et à les nettoyer dans un dispositif spécialement prévu à cet effet. Une telle méthode permet d'effectuer un nettoyage efficace des membranes mais présente de nombreux inconvénients. D'une part, elle induit l'arrêt de l'installation ou une baisse de rendement de celle-ci pendant un temps relativement long nécessaire au transfert des modules dans le dispositif de nettoyage et à l'opération de nettoyage proprement dite. De plus, une telle méthode présente également l'inconvénient d'être difficilement automatisable ce qui accroit son coût.

Il a également été proposé dans l'état de la technique de nettoyer les installations de filtration à membranes immergées en remplaçant l'effluent présent dans la cuve de traitement par une solution de nettoyage et en faisant fonctionner l'installation de façon usuelle afin de permettre le passage de la solution de nettoyage à travers les pores des membranes. Une telle technique présente également de nombreux inconvénients. Bien qu'efficace et automatisable, cette méthode nécessite en effet l'utilisation d'un grand volume de solution de nettoyage. Outre le fait que le coût de réactifs s'en trouve fortement augmenté, il est plus difficile et également plus coûteux de chauffer un tel grand volume de solution de nettoyage. Enfin, le volume de rejets (solution de nettoyage souillée) s'en trouve également augmenté.

On notera également qu'il a aussi été proposé dans l'état de la technique un procédé visant à permettre le nettoyage in situ des membranes d'une installation incluant de telles membranes immergées. Un tel procédé, notamment décrit dans le brevet américain US-A-5403479 aux noms de Smith et al, consiste à faire circuler une solution de nettoyage à travers les membranes selon un flux inverse au flux de filtration et ce, sans vider la cuve dans laquelle lesdites membranes sont installées. Le surplus de solution de nettoyage ne traversant pas les membranes est recyclé de façon à minimiser le volume de solution transféré dans ladite cuve.

L'efficacité de ce procédé est limitée car la solution de nettoyage utilisée se trouve forcément diluée par l'effluent présent dans la cuve dès qu'elle a traversé la membrane, ce qui diminue considérablement son efficacité. Parallèlement, la température de cette solution de nettoyage diminue également brutalement dès que ce passage est effectué, ce qui diminue aussi son efficacité. De plus, la durée d'injection de la solution de nettoyage doit être limitée dans le temps de façon à ne pas trop perturber le traitement en cours, notamment s'il s'agit d'un traitement biologique, la biomasse présente dans la cuve pouvant être rapidement décimée si la solution de nettoyage est injectée trop longtemps. Enfin, un tel procédé ne peut être mis en oeuvre lorsque l'installation à membranes immergées en question est utilisée dans le cadre de la potabilisation d'une eau puisque les réactifs chimiques utilisés dans les solutions de nettoyage sont incompatibles avec un tel traitement.

L'objectif de la présente invention est de proposer un procédé de nettoyage d'une installation de filtration du type à membranes immergées ne présentant pas les inconvénients de l'état de la technique.

Plus particulièrement, l'un des objectifs de l'invention est de proposer un tel procédé pouvant être mis en oeuvre en maintenant les membranes en place dans l'installation.

Encore un objectif de l'invention est de décrire un tel procédé de nettoyage-en-place mettant en jeu des volumes de solutions de nettoyage faibles et n'entrainant pas de dilution de celles-ci.

Egalement, un autre objectif de l'invention est de présenter un tel procédé pouvant être facilement automatisé.

Encore un autre objectif de l'invention est de proposer une installation de filtration permettant la mise en oeuvre d'un tel procédé.

Ces différents objectifs, ainsi que d'autres qui apparaitront par la suite, sont atteints grâce à l'invention qui concerne un procédé de nettoyage d'une installation de filtration du type comportant une pluralité de membranes immergées dans au moins une cuve contenant un effluent à filtrer, ledit procédé étant caractérisé en ce qu'il comprend les étapes consistant à :
- vidanger au moins partiellement l'effluent contenu dans ladite cuve pour exposer lesdites membranes à l'air ;
- faire passer au moins une solution de nettoyage à travers les pores desdites membranes selon un flux inverse au flux de filtration de l'effluent, en amenant ladite solution de nettoyage du côté perméat desdites membranes.

Préférentiellement, ledit procédé comprend également une étape consistant à récupérer ou à neutraliser ladite solution de nettoyage ayant transitée à travers lesdites membranes en pied de ladite cuve.

Ainsi, l'invention propose de façon originale d'effectuer un nettoyage en place des membranes de l'installation en vidangeant au moins partiellement la cuve dans laquelle les membranes de filtration sont installées, de façon à permettre un passage de la solution de nettoyage utilisée du côté perméat des membranes vers l'extérieur de celles-ci puis un écoulement de cette solution sur la surface extérieure des membranes jusqu'au fond de la cuve. De cette manière, la solution de nettoyage est utilisée au maximum de ses capacités puisqu'elle n'est pas diluée à sa sortie des membranes et qu'au contraire elle peut ruisseler le long de celles-ci après avoir traverser leurs pores.

De plus, un tel procédé permet d'obtenir une répartition uniforme de la solution de nettoyage sur les membranes puisqu'il n'y a pas de contre-pression d'exercée contre celles-ci.

Compte-tenu du fait que la solution de nettoyage ne se trouve pas diluée après son passage à travers les pores des membranes, il est par ailleurs possible d'utiliser des volumes de solutions de nettoyage plus faibles que ceux nécessaires à l'obtention d'un nettoyage efficace dans le cadre du procédé décrit ci-dessus selon le brevet US-A-5403479. Ceci constitue un autre avantage du procédé puisqu'il pourra ainsi être utilisé à moindre coût.

Bien qu'un tel procédé puisse être utilisé avec n'importe quelle installations de filtration à membranes immergées, ce procédé sera avantageusement mis en oeuvre dans les installations dans lesquelles les membranes présentent une position verticale à l'intérieur de ladite cuve. En effet, une telle position favorise l'écoulement de la solution de nettoyage sur le surface extérieure des membranes, après son passage à travers les pores de celles-ci.

Dans ce cas, selon un aspect préférentiel et particulièrement intéressant, ladite étape du procédé selon l'invention consistant à faire passer au moins une solution de nettoyage à travers les pores desdites membranes selon un flux inverse au flux de filtration de l'effluent, est effectuée en amenant alternativement ou simultanément ladite solution de nettoyage par le haut et par le bas desdites membranes. Une telle caractéristique permet de bien mouiller les membranes et conséquemment, d'utiliser des volumes de nettoyage plus faibles. A ce sujet, on notera que dans la technique divulguée par le brevet américain ci-dessus mentionné, la solution de nettoyage est toujours amenée par le bas des modules de filtration.

Avantageusement, ledit procédé consiste à effectuer une séquence de nettoyage incluant au moins une étape consistant à faire passer à travers lesdites membranes au moins une solution de nettoyage basique et au moins une étape consistant à faire passer à travers les pores desdites membranes au moins une solution de nettoyage acide. L'utilisation d'un tel nettoyage basique et d'un tel nettoyage acide permet d'accroître encore l'efficacité du nettoyage réalisé grâce au procédé selon l'invention.

Préférentiellement, ledit procédé inclut également au moins une étape consistant à faire passer à travers les pores desdites membranes au moins une solution de nettoyage contenant un oxydant. Une telle solution pourra par exemple être constituée par une solution d'hypochlorite de sodium (eau de Javel), ou de peroxyde d'hydrogène.

Encore plus préférentiellement, ledit procédé inclut au moins une étape consistant à faire passer à travers les pores desdites membranes au moins une solution de nettoyage contenant une base et un composé chloré et au moins une étape consistant à faire passer à travers les pores desdites membranes au moins une solution de nettoyage acide. Il a en effet été constaté que l'utilisation d'une telle séquence conduisait à un nettoyage des membranes particulièrement efficace, comme il sera exposé plus en détail ci-après. Notamment, une telle séquence autorise l'emploi de solutions de nettoyage à la température ambiante en supprimant la quasi-nécessité de l'état de la technique de chauffer les solutions de nettoyage classiquement utilisées.

Avantageusement, lesdites étapes de ladite séquence de nettoyage sont entrecoupées, suivies ou précédées d'une ou plusieurs étapes de rinçage consistant à faire passer de l'eau dans lesdites membranes.

Egalement avantageusement, ledit procédé peut inclure au moins une étape de trempage durant laquelle l'alimentation de la solution de nettoyage est stoppée de façon à laisser celle-ci imbiber les membranes et ainsi accroître son efficacité.

Avantageusement, la ou lesdites solutions de nettoyage sont utilisées à raison d'un volume total compris entre 2 et 20 litres par mètre carré de membranes. Ces volumes sont très inférieurs à ceux utilisés dans l'état de la technique qui sont classiquement de l'ordre de 50 litres par mètre carré.

Préférentiellement, la durée totale de ladite séquence de nettoyage est comprise entre 30 minutes et 4 heures.

L'invention concerne également une installation pour la mise en oeuvre d'un tel procédé, ladite installation incluant au moins une cuve de traitement à l'intérieur de laquelle est installée verticalement une pluralité de membranes de filtration, des moyens d'amenée d'un effluent à filtrer dans ladite cuve, des moyens de vidange de ladite cuve, des moyens d'évacuation du perméat provenant desdites membranes, au moins un réservoir de stockage d'une solution de nettoyage desdites membranes, des moyens d'amenée de ladite solution de nettoyage du côté perméat desdites membranes, et étant caractérisée en ce que lesdits moyens d'amenée de ladite solution de nettoyage incluent des moyens permettant d'amener alternativement ou simultanément ladite solution de nettoyage par le haut et par le bas desdites membranes.

Selon une variante intéressante de l'invention, cette installation inclut avantageusement au moins deux cuves de traitement montées en parallèle et à l'intérieur de chacune desquelles est installée verticalement une pluralité de membranes de filtration, et en ce qu'elle comprend des moyens permettant de nettoyer les membranes de la première cuve et des moyens permettant de stocker le contenu de cette première cuve dans la deuxième cuve pendant le nettoyage.

Préférentiellement, une telle installation inclut des moyens de mises en communication desdits moyens de vidange avec lesdits moyens d'alimentation.

L'invention, ainsi que les différents avantages qu'elle présente, seront plus facilement compris grâce à la description qui va suivre d'un mode non limitatif de mise en oeuvre de celle-ci en référence aux dessins dans lesquels :
- la figure 1 représente un schéma d'un premier mode de réalisation d'une installation conforme à la présente invention ;
- la figure 2 représente un schéma d'un second mode de réalisation d'une installation conforme à la présente invention ;

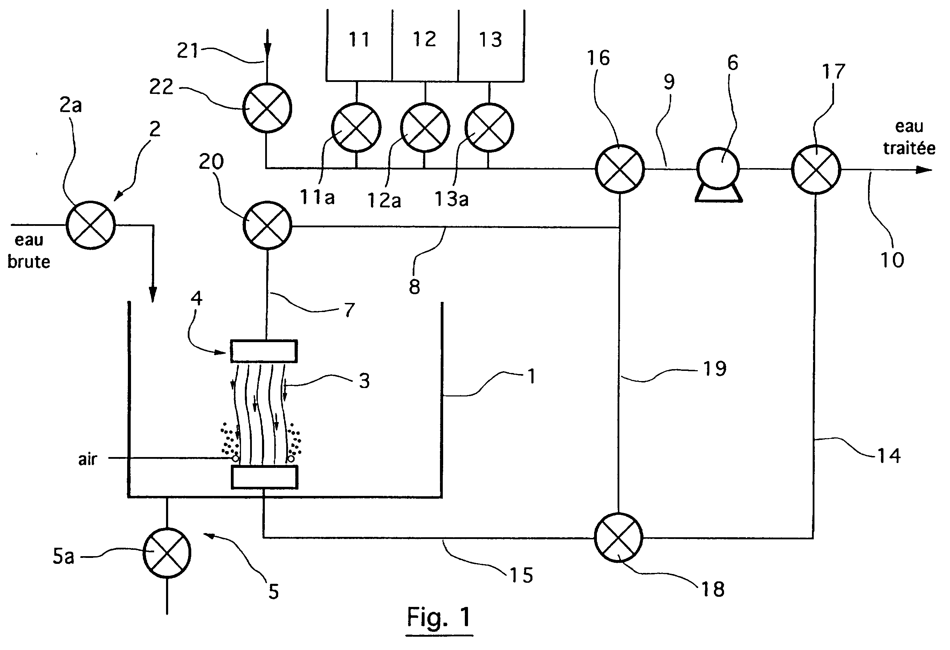

En référence à la figure 1, l'installation de filtration représentée comprend une cuve de traitement 1. Cette cuve est classiquement équipée de moyens d'amenée 2 de l'effluent à filtrer, incluant une vanne 2a et de moyens de vidange 5 incluant une vanne 5a. L'installation est alimentée en continue avec l'eau à filtrer par la vanne 2a commandée par le nveau d'eau dans la cuve.

Une pluralité de membranes 3, organisées en un module 4, sont installées verticalement dans ladite cuve. Dans le mode de réalisation décrit, ces membranes sont constituées de membranes d'ultrafiltration constituées de libres creuses à filtration de l'extérieur vers l'intérieur assemblées dans un module de 12 m².

L'installation comprend également une pompe aspirante 6 permettant d'extraire l'effluent traité constitué par le perméat des membranes, par un réseau de canalisations 7, 8, 9, 10, 15 et 19. L'installation comprend par ailleurs trois réservoirs 11, 12, 13 de stockage de solutions de nettoyage, pourvus chacun d'une vanne 11a, 12a et 13a, ainsi que des moyens incluant un jeu de canalisations 14, 15 et un jeu de vannes 16,17,18 permettant d'amener ces solutions de nettoyage au pied du module 4, c'est-à-dire en bas desdites membranes 3. Conformément à l'invention, l'installation comprend également des moyens incluant une canalisation 19, une vanne 20 ainsi que les canalisations 8, 9, 14 et les vannes 16,17 et 18 permettant d'amener les solutions de nettoyage en tête du module 4, c'est-à-dire en haut des membranes de filtration 3. Enfin, on notera également que le contenu des cuves est relié à une alimentation en eau du réseau 21 équipée d'une vanne 22.

En mode de filtration, la vanne 2a des moyens d'amenée 2 de l'effluent brut dans la cuve 1 est ouverte et la vanne 5a des moyens de vidange 5 de cette cuve est fermée, l'effluent remplissant donc la cuve 1 de façon à submerger les membranes de filtration 3. Par ailleurs, la vanne 20 est actionnée de façon à placer la canalisation 7 en communication avec la canalisation 8 et la vanne 18 est actionnée pour placer en communication la canalisation 15 avec la canalisation 19. Enfin, la vanne 16 est actionnée de façon à placer les canalisations 8 et 19 en communication avec la canalisation 9 et la vanne 17 est actionnée de façon à placer la canalisation 9 en communication avec la canalisation 10 d'évacuation du perméat. Ainsi, le perméat est soutiré à la fois en tête et au pied du module 4.

Lorsque les membranes 4 sont colmatées et doivent être nettoyées, l'installation est mise en oeuvre selon le procédé de nettoyage de l'invention. Les solutions de nettoyage contenues dans les réservoirs 11, 12 et 13 peuvent alors être utilisées pour décolmater ces membranes et peuvent avantageusement être injectées alternativement par le haut et par le bas de celles-ci. On notera également que les solutions de nettoyage pourront aussi être injectées simultanément par le haut et par le bas des membranes.

Selon la première étape de ce procédé de nettoyage, la cuve 1 est vidangée en fermant la vanne 2a des moyens d'amenée de l'effluent dans la cuve 1 et en ouvrant la vanne 5a des moyens de vidange 5, de façon à permettre l'évacuation de l'effluent de la cuve et permettre d'exposer à l'air les membranes.

Selon la deuxième étape consistant à effectuer le cycle de nettoyage proprement dit, les trois solutions de nettoyage sont utilisées les unes après les autres.

Par exemple, si l'on choisit d'utiliser en premier la solution contenue dans le réservoir 13, comme indiqué sur la figure 1, la vanne 13a de ce réservoir est ouverte (les vannes 11a et 12a des autres réservoirs restant fermées). Concomitamment, la vanne 20 est fermée, la vanne 16 est actionnée de façon à mettre en communication le réservoir 13 avec la canalisation 9, la vanne 17 est actionnée de façon à mettre en communication la canalisation 9 et la canalisation 14, et la vanne 18 est actionnée de façon à mettre en communication la canalisation 14 avec la canalisation 15. De cette façon, la solution de nettoyage arrive par le bas des membranes 4 et se propage de façon ascendante sur toute la hauteur de celles-ci. Le débit de cette solution est bien évidemment calculé pour permettre un bon mouillage des membranes. La solution de nettoyage traverse facilement les membranes, puisqu'aucun liquide susceptible d'exercer une contre-pression sur celles-ci n'est présent dans la cuve. La solution s'écoule ensuite le long des membranes. Après avoir traversé les membranes, la solution de nettoyage souillée par les impuretés présentes sur les membranes est évacuée par les moyens de vidange 5 de la cuve 1. On notera qu'il sera également possible dans d' autres modes de mise en oeuvre du procédé selon l'invention de ne pas évacuer la ou les solutions de nettoyage de la cuve mais simplement de les neutraliser.

Après un temps donné d'amenée de la solution de nettoyage par le bas des membranes, cette même solution peut ensuite être amenée par le haut des membranes de façon à augmenter l'efficacité du nettoyage et pour parfaire le mouillage des celles-ci. A cet effet, la vanne 18 est actionnée de façon à mettre en communication la canalisation 14 avec la canalisation 19 et la vanne 20 est actionnée de façon à mettre en communication la canalisation 8 avec la canalisation 7. La solution de nettoyage est ainsi amenée par le haut des membranes. Après avoir traversé celles-ci, elle s'écoule le long des membranes et est évacuée par les moyens de vidange 5.

Après avoir utilisé la solution de nettoyage contenue dans le réservoir 13, la séquence de nettoyage peut être poursuivie en utilisant ensuite les solutions de nettoyage contenues dans les réservoirs 12 et 11 en amenant également celles-ci alternativement par le haut et par le bas des membranes 4. A chaque changement de solution de nettoyage l'eau du réseau ou le perméat peuvent être utilisés pour rincer les canalisations par lesquelles cette solution a transité. Par ailleurs, on notera que pour chaque étape de la séquence de nettoyage, l'alimentation en solution de nettoyage pourra être stoppée (par fermeture de la vanne correspondante 11a, 12a ou 13a et arrêt de la pompe 6) de façon à autoriser un temps de trempage des membranes par la solution de nettoyage.

L'installation selon la figure 1 a été mise en oeuvre selon plusieurs séquences de nettoyage n° 1, n° 2, n° 3 et n° 4 dont le détail figure dans le tableau 1 ci-après, après que les membranes aient été colmatées à l'eau de Seine (30 NTU) ou avec une eau résiduaire urbaine. Pour l'eau de Seine, les trois premières séquences (1,2,3) ont été réalisées cuve vide et la dernière (4) a été testée cuve vide et cuve pleine. Pour l'eau résiduaire urbaine, la séquence 1 a été testée cuve vide et cuve pleine.

Toutes ces séquences de nettoyage consistent en une étape base, acide, chlore à l'exception de la dernière séquence pour laquelle seules deux étapes ont été mises en oeuvre (soude-chlore et acide). Plus précisément, dans les séquences n°1, n° 2 et n°3, trois solutions de nettoyage ont été successivement mises en oeuvre : une première solution contenant une base, une deuxième solution contenant de l'acide citrique à 0,5 % et une troisième solution d'eau de Javel à 0,03 %. Dans la séquence n° 4, seules deux solutions de nettoyage ont été utilisées : une première solution constituée par le mélange en solution aqueuse d'une base et d'eau de Javel à 0,03% et une deuxième solution d'acide citrique à 0,5%. Entre chaque solution de nettoyage, les membranes ont été rincées à l'eau du réseau, celle-ci étant amenée dans la cuve grâce à la canalisation 21 et à la vanne 22.

Par ailleurs, dans les séquences n° 1, n° 3 et n° 4, une alimentation par le haut puis par le bas des membranes a été effectuée pour chaque solution de nettoyage et pour chaque rinçage avec des débits de 100 l/h et pendant des temps d'alimentation variant de 2,5 à 30 minutes.

En ce qui concerne la séquence n° 2, seule une alimentation par le bas a été effectuée à un débit de 250 l/h et avec des temps d'alimentation de 30 minutes pour la solution de nettoyage basique, de 15 minutes pour les deux autres solutions de nettoyage et de 5 minutes pour les rinçages à l'eau du réseau.

Enfin, dans les séquences n° 2 et n° 3 des temps de trempage variant de 15 à 40 minutes ont été ménagés après l'injection des solutions de nettoyage.

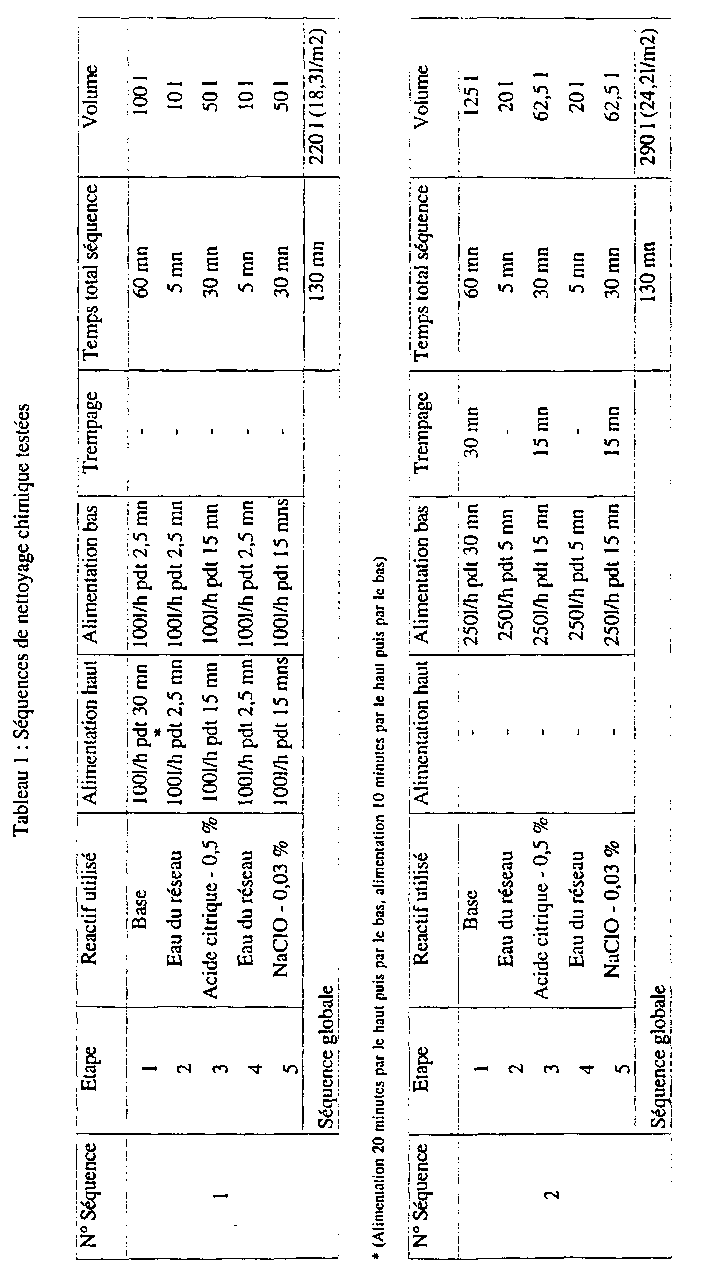

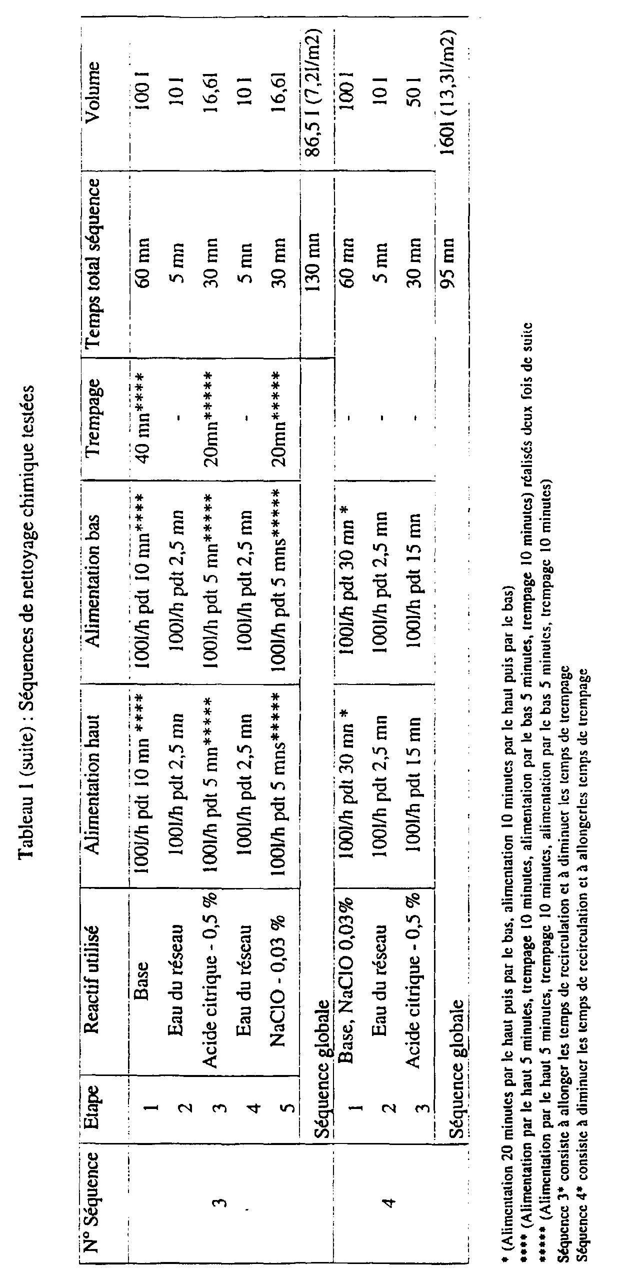

Ces différentes séquences de nettoyages ont été mises en oeuvre au cours de différents nettoyages après que les membranes aient été colmatées à l'eau de Seine, comme décrit dans le tableau 2.

La séquence de nettoyage n°1 a été mise en oeuvre pour un nettoyage dans lequel la soude à 25°C à 1% (pH=11,7) a été testée pour constituer la solution de nettoyage basique (nettoyage n° 7).

La séquence de nettoyage n°2 a été mise en oeuvre pour un seul nettoyage dans lequel la base utilisée pour constituer la solution de nettoyage basique a été de la soude à 1% à 25°C (pH=11,9) (nettoyage n° 2).

La séquence de nettoyage n° 3 a été mise en oeuvre pour deux nettoyages (nettoyage n° 8 et n°9) dans lesquels la base utilisée pour constituer la solution de nettoyage basique a été de la soude à 1 % à 25°C (pH=11,9).

La séquence de nettoyage n° 4 a été mise en oeuvre pour trois nettoyages dans lesquels la base utilisée pour constituer la solution de nettoyage contenant à la fois une telle base et de l'eau de Javel a été de la soude à 0,5 % (nettoyages n° 12, 14 et 15).

Tous ces nettoyages ont été effectuées, selon l'invention, avec la cuve 1 vide. Seul le nettoyage n°15 a été effectué, à titre comparatif, avec la cuve pleine d'effluent.

Au cours de ces différents nettoyages, différents volumes de solution de nettoyage ont été utilisés allant de 4,6 à 23,3 l/m².

Deux nettoyages ont également été effectuées après que les membranes aient été colmatées avec de l'eau résiduaire urbaine et des boues activées, comme décrit dans le tableau 3.

Au cours de ces deux nettoyages (nettoyages n°16 et n°17), la séquence de nettoyage utilisé a été la séquence n° 1 avec de l'Ultrasil à 60% en tant que base. Le nettoyage n°16 a été effectué selon l'invention (cuve vide) tandis que le nettoyage n°17 a été effectué, à titre comparatif, cuve pleine.

La qualité des nettoyages effectués a été évaluée d'une part en calculant le pourcentage de perméabilité des membranes à l'eau du réseau après nettoyage par rapport à la perméabilité des membranes neuves et d'autre part en évaluant le gain de perméabilité de ces membranes.

Le tableau 2 donne les résultats obtenus avec de l'eau de Seine. Le tableau 3 donne les résultats obtenus avec l'eau résiduaire urbaine et les boues activées.

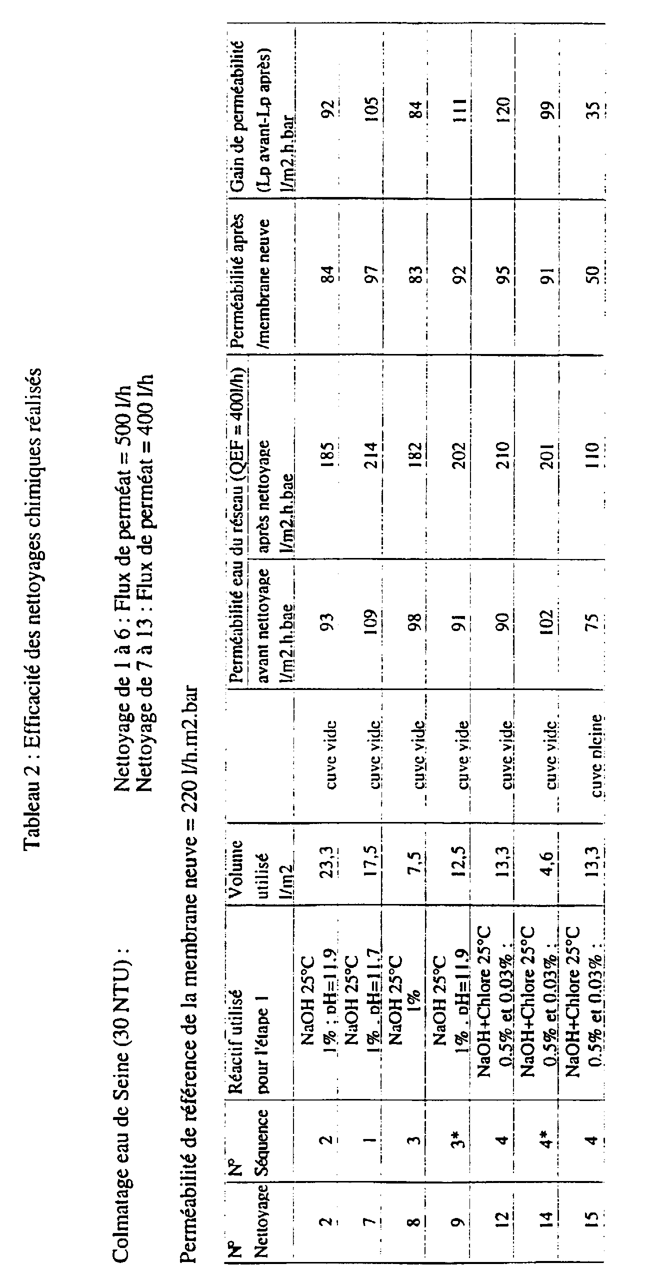

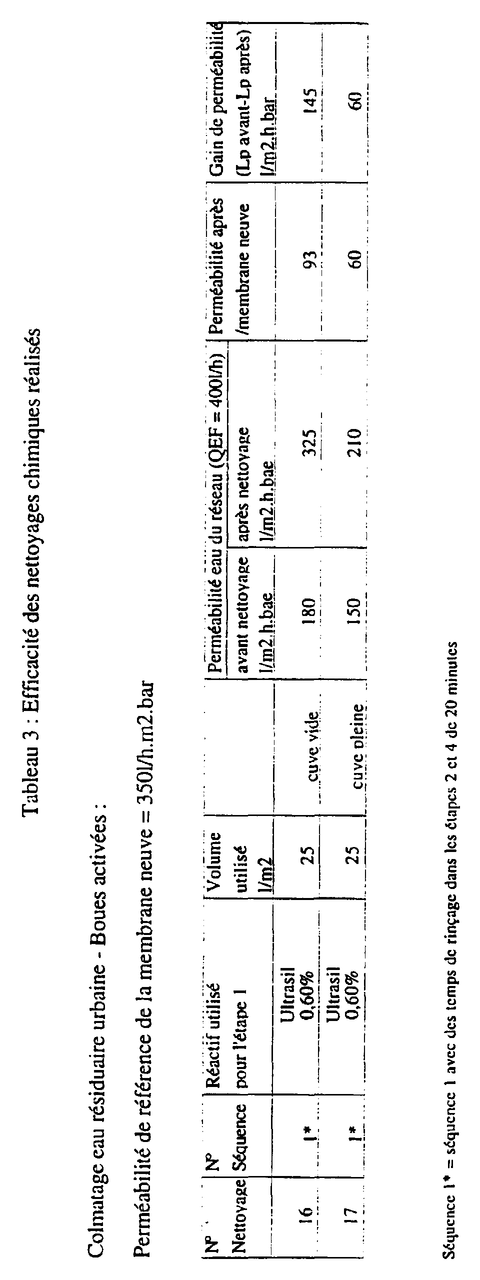

Ces résultats montrent que le procédé de nettoyage selon l'invention, comparé au nettoyage consistant à remplir la cuve avec des solutions de lavage, permet de réduire les volumes de réactifs chimiques tout en conservant une excellente efficacité. En effet, on constate dans le cadre de l'invention que la perméabilité de la membrane mesurée après les nettoyages est proche ou égale à celle de la membrane neuve.

De plus, ces résultats permettent aussi de montrer que l'injection du réactif alternativement par le haut et par le bas (nettoyage n°7) est plus efficace que lorsque le réactif est seulement injecté de bas en haut (nettoyage n°2).

La combinaison judicieuse des différents réactifs au cours des différentes séquences de nettoyages permet de diminuer les volumes de réactif ainsi que le temps de nettoyage.

En particulier, les nettoyages effectués selon la séquence de lavage n° 4 utilisant une première solution de nettoyage contenant à la fois de la soude et du chlore se sont révélés particulièrement efficace (nettoyage n° 12 et 14).

Ces résultats permettent aussi de constater une efficacité du nettoyage notablement plus élevée dans le cadre de l'invention mise en oeuvre en cuve vide que lorsque ce nettoyage est effectué en cuve pleine (nettoyages n° 15 et 17).

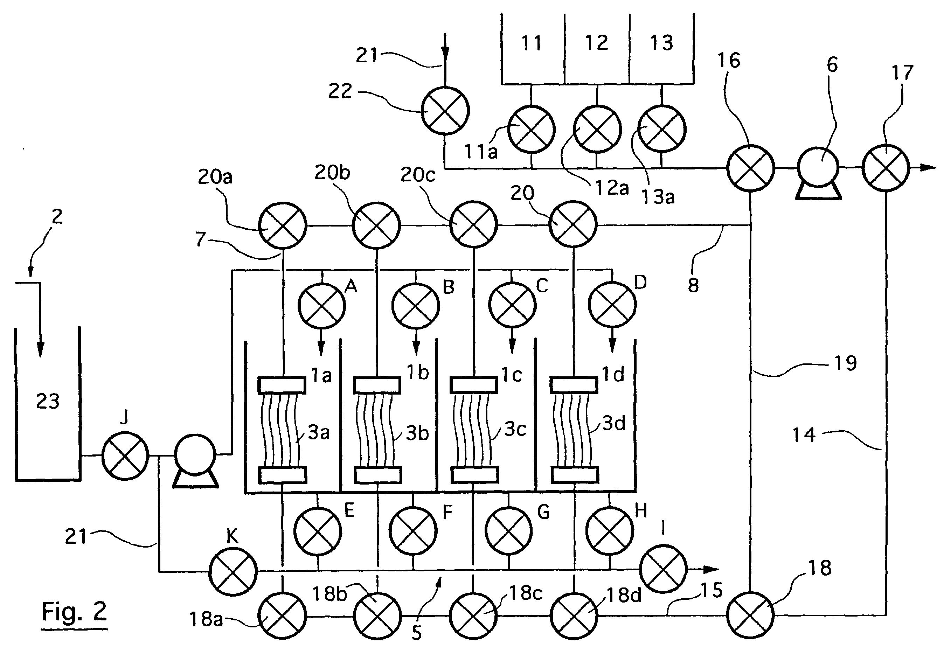

En référence à la figure 2, un second mode de réalisation d'une installation, permettant un nettoyage des membranes selon le procédé de l'invention sans interruption de son utilisation en mode de filtration, est représenté.

Outre un système de distribution de solutions de nettoyage semblable à celui de l'installation présentée ci dessus, cette solution présente quatre cuves de traitement la, 1b, 1c, 1d à l'intérieur de chacune desquelles est installée une pluralité de membranes filtration (fibres creuses) organisées en modules 3a, 3b, 3c, 3d.

Ces modules peuvent être alimenté :s à tour de rôle en solutions de nettoyage grâce aux vannes 18a, 18b, 18c, 18d (pour une alimentation par le bas des membranes) et grâce aux vannes 20a, 20b, 20c, 20d (pour une alimentation par le haut des membranes).

Les moyens d'alimentation 2 des cuves en effluent à filtrer incluent un réservoir tampon 23, une vanne générale J et une vanne A, B, C, D pour chaque cuve de traitement. Les moyens de vidange des cuves, incluent quant à eux une vanne générale I et une vanne pour chaque cuve E, F, G, H. Enfin les moyens de vidange et les moyens d'alimentation des cuves sont reliés entre eux par une canalisation 21 pourvue d'une vanne K, permettant de transférer à volonté le volume vidangé d'une cuve dans les autres cuves et inversement.

Lorsque l'installation fonctionne à plein régime, les quatre cuves 1a, 1b, 1c et 1d sont alimentées en effluent à filtrer. A cet effet, les vannes J et A, B, C, D sont ouvertes tandis que les vannes de vidange E, F, G, H, I et la vanne K sont fermées.

Lorsque l'on souhaite nettoyer les membranes de l'une des cuves, par exemple la cuve 1d, la vanne d'alimentation générale J et la vanne d'alimentation D de la cuve sont fermées et les vannes H et K sont ouvertes, les autres vannes restant dans le même état que précédemment. La vanne d'alimentation générale J étant fermée, l'effluent à filtrer arrivant dans l'installation est stocké dans le réservoir tampon 23. Dans les modes de réalisation où le contenu de la cuve est utile (par exemple lorsqu'il contient du charbon activé ou encore des boues activées) le volume d'effluent présent dans la cuve 1d est évacué de cette cuve et transféré dans les trois autres cuves 1a, 1b et 1c pendant que la filtration continue

Une fois le contenu de la cuve 1d complètement transféré dans les autres cuves, la vanne de vidange H et la vanne K sont fermées et la vanne J est ouverte. Les solutions de nettoyage peuvent alors être distribuées dans la cuve vide 1d à partir des réservoirs 11, 12 et 13, alternativement par le bas et par le haut des membranes.

Lorsque la séquence de nettoyage est terminée, la vanne H et la vanne I sont ouvertes pour évacuer les solutions de nettoyage souillées présentes dans le fond de la cuve 1d. Ensuite, la cuve peut être rincée en ouvrant simplement la vanne D d'alimentation de la cuve.

Afin de remplir de nouveau la cuve 1d d'effluent à traiter avec le surplus d'effluent présent dans les cuves 1a, 1b et 1c, les vannes d'alimentation A, B, C sont fermées, et les vannes de vidange E, F, G sont ouvertes. La vanne de vidange H de la cuve 1d est fermée ainsi que les vannes d'alimentation générale J et de vidange générale I. Afin de permettre le transfert du surplus des cuves 1a, 1b et 1c dans la cuve 1d, la vanne K est ouverte.

Enfin, pour permettre un retour de l'installation en fonctionnement de filtration normal, les vannes A, B, C, D, J sont ouvertes et les autres vannes fermées.

Une telle installation permet donc la mise en oeuvre du procédé de nettoyage des membranes selon l'invention, en conservant le contenu utile des cuves de traitement.

L'invention propose donc un procédé de nettoyage pouvant être facilement automatisé, mettant en oeuvre des solutions de nettoyage non diluées selon des faibles volumes, ainsi qu'une installation pour la mise en oeuvre du procédé.

Les modes de réalisation de l'invention ici décrits n'ont pas pour objet de réduire la portée de la présente demande de brevet. Il pourra donc y être apporté de nombreuses modifications sans sortir de son cadre. En ce qui concerne le procédé, on pourra notamment envisager l'utilisation de solutions de nettoyage autres que celles indiquées ainsi que d'autres types de membranes. En ce qui concerne l'installation, on pourra notamment prévoir un nombre de cuves différents et des circuits de pompage permettant de continuer à filtrer pendant le nettoyage des membranes d'une cuve.

## Revendications

1. Procédé de nettoyage d'une installation de filtration du type comportant une pluralité de membranes immergées dans au moins une cuve contenant un effluent à filtrer, ledit procédé étant caractérisé en ce qu'il comprend les étapes consistant à :
- vidanger au moins partiellement l'effluent contenu dans ladite cuve de façon à exposer lesdites membranes à l'air;
- faire passer au moins une solution de nettoyage à travers lesdites membranes selon un flux inverse au flux de filtration de l'effluent, en amenant ladite solution de nettoyage du côté perméat desdites membranes.

2. Procédé selon la revendication 1 caractérisé en ce qu'il comprend de plus une étape consistant à récupérer ou à neutraliser ladite solution de nettoyage ayant transitée à travers lesdites membranes en pied de ladite cuve.

3. Procédé selon la revendication 1 ou 2 caractérisé en ce que lesdites membranes présentent une position verticale à l'intérieur de ladite cuve.

4. Procédé selon la revendication 3 caractérisé en ce que ladite étape consistant à faire passer au moins une solution de nettoyage à travers lesdites membranes selon un flux inverse au flux de filtration de l'effluent, est effectuée en amenant alternativement ou simultanément ladite solution de nettoyage par le haut et par le bas desdites membranes.

5. Procédé selon l'une des revendications 1 à 4 caractérisé en ce qu'il consiste à effectuer une séquence de nettoyage incluant au moins une étape consistant à faire passer à travers lesdites membranes au moins une solution de nettoyage basique et au moins une étape consistant à faire passer à travers lesdites membranes au moins une solution de nettoyage acide.

6. Procédé selon la revendication 5 caractérisé en ce que ladite séquence de nettoyage inclut au moins une étape consistant à faire passer à travers lesdites membranes au moins une solution de nettoyage contenant au moins un oxydant.

7. Procédé selon les revendications 5 et 6 caractérisé en ce que ladite séquence de nettoyage inclut au moins une étape consistant à faire passer à travers lesdites membranes au moins une solution de nettoyage contenant une base et un oxydant et au moins une étape consistant à faire passer à travers lesdites membranes au moins une solution de nettoyage acide.

8. Procédé selon l'une des revendications 5 à 7 caractérisé en ce que lesdites étapes de ladite séquence de nettoyage sont entrecoupées, suivies ou précédées d'une ou plusieurs étapes de rinçage consistant à faire passer de l'eau à travers lesdites membranes.

9. Procédé selon l'une des revendications 5 à 7 caractérisé en ce que lesdites étapes de ladite séquence de nettoyage sont entrecoupées, suivies ou précédées d'un ou plusieurs temps de trempage.

10. Procédé selon l'une des revendications 1 à 9 caractérisé en ce que la ou lesdites solutions de nettoyage sont utilisées à raison d'un volume total compris entre 2 et 20 litres par mètre carré de membranes.

11. Procédé selon l'une des revendications 5 à 10 caractérisé en ce que la durée totale de ladite séquence de nettoyage est comprise entre 30 min et 4 heures.

12. Installation pour la mise en oeuvre du procédé selon l'une des revendications 3 à 11 incluant au moins une cuve de traitement (1) à l'intérieur de laquelle est installée verticalement une pluralité de membranes de filtration (3), des moyens d'amenée (2) d'un effluent à filtrer dans ladite cuve, des moyens de vidange (5) de ladite cuve (1), des moyens d'évacuation du perméat (7,8,9,10) provenant desdites membranes, au moins un réservoir de stockage (11,12,13) d'une solution de nettoyage desdites membranes, des moyens d'amenée de ladite solution de nettoyage du côté perméat desdites membranes caractérisée en ce que lesdits moyens d'amenée de ladite solution de nettoyage incluent des moyens permettant d'amener alternativement ou simultanément ladite solution de nettoyage par le haut et par le bas desdites membranes.

13. Installation selon la revendication 12 caractérisée en ce qu'elle inclut au moins deux cuves (1a,1b,1c, 1d) de traitement montées en parallèle et à l'intérieur de chacune desquelles est installée verticalement une pluralité de membranes de filtration (3a,3b,3c,3d), et en ce qu'elle comprend des moyens permettant de nettoyer les membranes de la première cuve et des moyens permettant de stocker le contenu de cette première cuve dans la deuxième cuve pendant le nettoyage.

14. Installation selon la revendication 13 caractérisée en ce qu'elle inclut des moyens de mises en communication (21, K) desdits moyens de vidange (5) avec lesdits moyens d'alimentation (2)

## Claims

1. Method for cleaning a filtration installation of the type comprising a plurality of membranes immersed in at least one tank containing an effluent to be filtered, the said method being characterised in that it comprises the steps consisting in:
- at least partially emptying out the effluent contained in the said tank so as to expose the said membranes to the air;
- passing at least one cleaning solution through the said membranes in a direction of flow counter to the direction of flow for filtration of the effluent by feeding the said cleaning solution from the permeate side of the said membranes.

2. Method according to Claim 1, characterised in that it also comprises a step consisting in recovering or neutralising the said cleaning solution that has passed through the said membranes at the foot of the said tank.

3. Method according to Claim 1 or 2, characterised in that the said membranes are in a vertical position inside the said tank.

4. Method according to Claim 3, characterised in that the said step consisting in passing at least one cleaning solution through the said membranes in a direction of flow counter to the direction of flow for filtration of the effluent is carried out by feeding the said cleaning solution alternately or simultaneously via the top and via the bottom of the said membranes.

5. Method according to one of Claims 1 to 4, characterised in that it consists in carrying out a cleaning sequence including at least one step consisting in passing at least one alkaline cleaning solution through the said membranes and at least one step consisting in passing at least one acid cleaning solution through the said membranes.

6. Method according to Claim 5, characterised in that the said cleaning sequence includes at least one step consisting in passing at least one cleaning solution containing at least one oxidising agent through the said membranes.

7. Method according to Claims 5 and 6, characterised in that the said cleaning sequence includes at least one step consisting in passing at least one cleaning solution containing a base and an oxidising agent through the said membranes and at least one step consisting in passing at least one acid cleaning solution through the said membranes.

8. Method according to one of Claims 5 to 7, characterised in that the said steps in the said cleaning sequence are interspersed by, followed by or preceded by one or more rinsing steps consisting in passing water through the said membranes.

9. Method according to one of Claims 5 to 7, characterised in that the said steps in the said cleaning sequence are interspersed by, followed by or preceded by one or more soaking periods.

10. Method according to one of Claims 1 to 9, characterised in that the said cleaning solution or cleaning solutions are (sic) used at a rate of a total volume of between 2 and 20 litres per square metre of membranes.

11. Method according to one of Claims 5 to 10, characterised in that the total duration of the said cleaning sequence is between about 30 min. and 4 hours.

12. Installation for implementation of the method according to one of Claims 3 to 11, including at least one treatment tank (1) inside which a plurality of filtration membranes (3) are installed vertically, means (2) for feeding an effluent to be filtered into the said tank, means (5) for emptying the said tank (1), means (7, 8, 9, 10) for discharging the permeate coming from the said membranes, at least one reservoir (11, 12, 13) for storing a cleaning solution for the said membranes, and means for feeding the said cleaning solution from the permeate side of the said membranes, characterised in that the said means for feeding the said cleaning solution include means enabling the said cleaning solution to be fed alternately or simultaneously via the top and via the bottom of the said membranes.

13. Installation according to Claim 12, characterised in that it includes at least two treatment tanks (1a, 1b, 1c, 1d) mounted in parallel and inside each of which a plurality of filtration membranes (3a, 3b, 3c, 3d) are vertically installed, and in that it comprises means enabling cleaning of the membranes of the first tank and means enabling storage of the contents of said first tank in the second tank during cleaning.

14. Installation according to Claim 13, characterised in that it includes means (21, K) for bringing the said emptying means (5) into communication with the said feed means (2).

## Patentansprüche

1. Reinigungsverfahren für eine Filterungsanlage von der Art, die eine Mehrzahl von Membranen umfaßt, die in mindestens einem Gefäß, welches zu reinigendes Abwasser enthält, eingetaucht sind, dadurch gekennzeichnet, daß es die folgenden Schritte umfaßt:
- zumindest teilweises Entleeren des im Gefäß enthaltenen Abwassers, um die Membranen der Luft auszusetzen;
- mindestens eine Reinigungslösung durch die Membranen fließen lassen, in Gegenrichtung zur Fließrichtung des Abwassers bei der Filterung, wobei die Reinigungslösung von der Permeatseite der Membranen zugeführt wird.

2. Verfahren gemäß Anspruch 1,
dadurch gekennzeichnet, daß es einen zusätzlichen Schritt umfaßt, bestehend in der Wiedergewinnung oder der Neutralisierung der durch die Membranen gelaufenen Reinigungslösung am Fuße des Gefäßes.

3. Verfahren gemäß Anspruch 1 oder 2,
dadurch gekennzeichnet, daß die Membranen in vertikaler Lage im Gefäß eingesetzt sind.

4. Verfahren gemäß Anspruch 3,
dadurch gekennzeichnet, daß der Schritt, bei dem mindestens eine Reinigungslösung in Gegenrichtung zur Fließrichtung des Abwassers bei der Filterung durch die Membranen fließt, dadurch ausgeführt wird, daß die Reinigungslösung abwechselnd oder gleichzeitig von oben und von unten an die Membranen herangeführt wird.

5. Verfahren gemäß einem der Ansprüche 1 bis 4,
dadurch gekennzeichnet, daß es eine Reinigungsfolge ausführt, die mindestens einen Schritt umfaßt, bei dem mindestens eine alkalische Reinigungslösung und mindestens einen Schritt, bei dem mindestens eine saure Lösung durch die Membranen geleitet wird.

6. Verfahren gemäß Anspruch 5,
dadurch gekennzeichnet, daß die Reinigungsfolge mindestens einen Schrittumfaßt, bei dem mindestens eine Reinigungslösung durch die Membranen geleitet wird, die mindestens ein Oxidationsmittel enthält.

7. Verfahren gemäß den Ansprüchen 5 und 6,
dadurch gekennzeichnet, daß die Reinigungsfolge mindestens einen Schritt umfaßt, bei dem mindestens eine Reinigungslösung durch die Membranen geleitet wird, die ein Alkali und ein Oxidationsmittel enthält sowie mindestens einen Schritt, bei dem mindestens eine saure Reinigungslösung durch die Membranen geleitet wird.

8. Verfahren gemäß einem der Ansprüche 5 bis 7,
dadurch gekennzeichnet, daß ein oder mehrere Spülvorgänge vor der Reinigungsfolge stattfinden oder diese unterbrechen oder ihr folgen, wobei Wasser durch die Membranen geleitet wird.

9. Verfahren gemäß einem der Ansprüche 5 bis 7,
dadurch gekennzeichnet, daß ein oder mehrere Wässerungsperioden vor der Reinigungsfolge stattfinden oder diese unterbrechen oder ihr folgen.

10. Verfahren gemäß einem der Ansprüche 1 bis 9,
dadurch gekennzeichnet, daß die angewandte Menge an Reinigungslösung(en) zwischen 2 und 20 Liter je Quadratmeter Membranfläche beträgt.

11. Verfahren gemäß einem der Ansprüche 5 bis 10,
dadurch gekennzeichnet, daß die Gesamtdauer der Reinigungsfolge zwischen 30 Minuten und 4 Stunden liegt.

12. Anlage zur Anwendung des Verfahrens gemäß einem dar Ansprüche 3 bis 11, die mindestens ein Behandlungsgefäß (1) umfaßt, in dem eine Mehrzahl von Filterungsmembranen (31 vertikal eingesetzt sind, ferner Zuleitungsmittel (2) eines im Gefäß zu filternden Abwassers, Mittel zum Entleeren (5) des Gefäßes (1), Mittel zum Entfernen des von den Membranen kommenden Permeats (7, 8, 9, 10), mindestens ein Gefäß (11, 12, 13) zum Lagern einer Reinigungslösung für die Membranen, Mittel zum Zuleiten der Reinigungslösung von der Permeatseite der Membranen,
dadurch gekennzeichnet, daß die Mittel zum Zuleiten der Reinigungslösung Mittel umfassen, welche das abwechselnde oder gleichzeitige Zuleiten der Reinigungslösung von oben und von unten an die Membranen ermöglichen.

13. Anlage gemäß Anspruch 12,
dadurch gekennzeichnet, daß sie mindestens zwei parallel zueinander angebrachte Behandlungsgefäße (1a, 1b, 1c, 1d) umfaßt, wobei im Inneren eines jeden Gefäßes eine Vielzahl von Filterungemembranen (3a, 3b, 3c, 3d) vertikal eingesetzt sind und dadurch, daß sie über Mittel verfügt, mit denen die Membranen den ersten Gefäßes gereinigt werden können, und Mittel mit denen der Inhalt den ersten Gefäßes während der Reinigung im zweiten Gefäß gelagert werden kann.

14. Anlage gemäß Anspruch 13,
dadurch gekennzeichnet, daß sie Verbindungsmittel (21, K) zwischen den Entleerungsmitteln (5) und den Mitteln zum Einspeisen (2) umfaßt.
